# EUROPÄISCHE PATENTSCHRIFT

(11) **EP 4 417 442 B1**
(45) Veröffentlichungstag und Bekanntmachung des Hinweises auf die Patenterteilung: **18.03.2026**
(21) Anmeldenummer: 24150025.5
(22) Anmeldetag: 02.01.2024
(51) Int. Cl.: B60C 11/24

(54) **VERFAHREN ZUR BESTIMMUNG EINES ABRIEBWERTES EINES REIFENS**
METHOD FOR DETERMINING AN ABRASION VALUE OF A TIRE
PROCÉDÉ DE DÉTERMINATION D'UNE VALEUR D'USURE D'UN PNEU

(30) Priorität: 17.02.2023 DE 102023201362
(43) Veröffentlichungstag der Anmeldung: 21.08.2024
(73) Patentinhaber: Continental Reifen Deutschland GmbH, 30175 Hannover (DE)
(72) Erfinder: Kurz, Martin, 30175 Hannover (DE)
(74) Vertreter: Continental Corporation

(56) Entgegenhaltungen:
- WO-A1-2022/026541
- JP-A- 2007 153 034
- US-A1- 2018 272 813
- US-A1- 2018 293 815
- US-A1- 2020 348 212

## Beschreibung

Die Erfindung betrifft ein Verfahren zur Bestimmung eines Abriebwertes eines Reifens eines Fahrzeugs.

Die Erfindung geht aus von einem Verfahren zur Bestimmung eines Abriebwertes eines Reifens eines Fahrzeugs, aufweisend einen der folgenden Schritte:
- Bereitstellen eines Fahrzeugs, wobei das Fahrzeug mindestens einen Reifen aufweist;
- Bereitstellen einer Auswertevorrichtung, wobei die Auswertevorrichtung zur Bestimmung eines Abriebwertes des mindestens eines Reifens in Abhängigkeit einer physikalischen Messgröße des Fahrzeugs vorgesehen ist;
- Bestimmen der physikalischen Messgröße des Fahrzeugs;
- Bestimmen des Abriebwertes des mindestens eines Reifens in Anhängigkeit der physikalischen Messgröße des Fahrzeugs mittels der Auswertevorrichtung.

Bei dem Fahrzeug handelt es sich beispielsweise um einen PKW, um einen LKW oder um ein Zweirad.

Bei der physikalischen Messgröße des Fahrzeugs handelt es sich beispielsweise um eine Beschleunigung oder um eine Geschwindigkeit des Fahrzeugs.

Aus dem Stand der Technik sind Verfahren zur Bestimmung eines Abriebwertes eines Reifens eines Fahrzeugs bekannt. Dabei ist es aus dem Stand der Technik auch bekannt, dass eine physikalische Messgröße des Fahrzeugs bestimmt wird und daraufhin in Abhängigkeit der physikalischen Messgröße des Fahrzeugs ein Abriebwert des mindestens einen Reifens mittels einer Auswertevorrichtung bestimmt werden kann. Aus dem Stand der Technik ist es insbesondere bekannt, wonach es sich bei der physikalischen Messgröße des Fahrzeugs beispielsweise um eine Beschleunigung des Fahrzeugs handelt. WO2022/026541 offenbart ein Verfahren zum Eliminieren der Notwendigkeit einer manuellen Rückstellung eines Reifenverschleißsystems in einem Reifenmanagementsystem.

Bei den aus dem Stand der Technik bekannten Verfahren zur Bestimmung eines Abriebwertes eines Reifens eines Fahrzeugs könnten Umstände bei und während der Bedienung des Fahrzeugs bei der Bestimmung des Abriebwertes unberücksichtigt bleiben, wobei diese Umstände einen Einfluss auf den Abrieb des Reifens haben könnten. Ein gemäß der aus dem Stand der Technik bekannten Verfahren bestimmte Abriebwert des mindestens einen Reifen könnte somit möglicherweise nicht dem tatsächlichen Abriebwert eines Reifens entsprechen.

Insbesondere könnten für den Fall, wonach Beschleunigungen des Fahrzeugs bestimmt werden und daraufhin in Abhängigkeit der Beschleunigungen ein Abriebwert des mindestens einen Reifens des Fahrzeugs bestimmt wird, Fahrtvorgänge unberücksichtigt bleiben, bei denen das Fahrzeug aus einem Startnichtbewegungszustand in eine Fahrt des Fahrzeugs hinein überführt wird und/oder solche Fahrtvorgänge, bei denen das Fahrzeug aus einem Fahrtzustand des Fahrzeugs in einen Endnichtbewegungszustand des Fahrzeugs hinein überführt wird. Solche Fahrtvorgänge könnten mit einem Abrieb des mindestens einen Reifens des Fahrzeugs einhergehen. Da dieser Abrieb unberücksichtigt bleiben könnte, entspräche ein gemäß dem Stand der Technik bestimmter Abriebwert des mindestens einen Reifens nicht dem tatsächlichen Abriebwert des mindestens eine Reifens. Der tatsächliche Abriebwert repräsentiert den tatsächlichen mechanischen oder physikalischen Abrieb des mindestens einen Reifens. Gemäß dem Stand der Technik könnte beispielsweise eine Korrektur oder eine Veränderung eines anhand von Beschleunigungen des Fahrzeugs ermittelten Abriebwertes anhand eines Lenkwinkels des Fahrzeugs, bei ausreichend geringer Geschwindigkeit, zu einem zusätzlich ermittelten Abriebwert erfolgen. Dabei ist problematisch, dass gegebenenfalls nicht alle Lenkwinkelvorgänge erfasst werden könnten; eine bestimmte Anzahl an Fahrtvorgängen, die zu einem Abrieb des mindestens einen Reifens führen könnten, würden möglicherweise unberücksichtigt bleiben.

Der Erfindung liegt daher die Aufgabe zugrunde, ein Verfahren zur Bestimmung eines Abriebwertes eines Reifens bereit zu stellen, wobei mittels des erfindungsgemäßen Verfahrens ein Abriebwert eines Reifens ermittelt werden kann, der in einem höheren Maß mit einem tatsächlichen Abriebwert eines Reifens übereinstimmt als solche Abriebwerte, die gemäß der aus dem Stand der Technik bekannten Verfahren zur Bestimmung eines Abriebwertes ermittelt werden könnten.

Gelöst wird die erfindungsgemäß gestellte Aufgabe dadurch, dass das Verfahren die folgenden weiteren Schritte aufweist:
- Bestimmen eines abgeschlossenen Fahrtvorgangs des Fahrzeugs, wobei es sich bei einem abgeschlossenen Fahrtvorgang um eine Fahrt des Fahrzeugs aus einem Startnichtbewegungszustand des Fahrzeugs heraus bis zu einer Fahrt des Fahrzeugs in einen Endnichtbewegungszustand des Fahrzeugs hinein handelt, wobei dem abgeschlossenen Fahrtvorgang ein weiterer Abriebwert des mindestens einen Reifens zugeordnet wird;
- Bestimmen eines neuen Abriebwertes mittels der Auswertevorrichtung in Abhängigkeit des Abriebwertes und des weiteren Abriebwertes.

Der abgeschlossene Fahrtvorgang kann auch als Fahrzyklus oder Einzelfahrt bezeichnet werden.

Durch den erfindungsgemäßen Umstand, wonach das Verfahren die folgenden weiteren Schritte aufweist:
- Bestimmen eines abgeschlossenen Fahrtvorgangs des Fahrzeugs, wobei es sich bei einem abgeschlossenen Fahrtvorgang um eine Fahrt des Fahrzeugs aus einem Startnichtbewegungszustand des Fahrzeugs heraus bis zu einer Fahrt des Fahrzeugs in einen Endnichtbewegungszustand des Fahrzeugs hinein handelt, wobei dem abgeschlossenen Fahrtvorgang ein weiterer Abriebwert des mindestens einen Reifens zugeordnet wird;
- Bestimmen eines neuen Abriebwertes mittels der Auswertevorrichtung in Abhängigkeit des Abriebwertes und des weiteren Abriebwertes,
werden solche Fahrtvorgänge und insbesondere solche Bewegungen des Fahrzeugs während eines Fahrtvorgangs bei der Bestimmung des Abriebwertes berücksichtigt, die mittels der aus dem Stand der Technik bekannten Methoden zur Bestimmung eines Abriebwertes eines Reifens unberücksichtigt bleiben könnten. Somit wird ein neuer Abriebwert des mindestens einen Reifens bestimmt, der mehr mit einem tatsächlichen Abriebwert des mindestens einen Reifens übereinstimmen kann, als es bei Abriebwerten der Fall sein könnte, die gemäß der aus dem Stand der Technik bekannten Verfahren bestimmt werden.

Durch den erfindungsgemäßen Umstand, wonach einem jeweils abgeschlossenen Fahrtvorgang ein weiterer Abriebwert des mindestens einen Reifens zugeordnet wird, kann beispielsweise ein generell gemittelter Abriebwert für eine jede Einzelfahrt des Fahrzeugs bestimmt und bei der Bestimmung des Abriebwertes des mindestens einen Reifens berücksichtigt werden. Ferner werden somit Bewegungen des Fahrzeugs aus einem Startnichtbewegungszustand heraus in eine Fahrt des Fahrzeugs und/oder von einer Fahrt des Fahrzeugs hinein in einen Endnichtbewegungszustand des Fahrzeugs, die mit einem derartigen Lenkmanöver einher gehen, das gemäß der aus dem Stand der Technik bekannten Verfahren zu keiner Berücksichtigung bei der Bestimmung des Abriebwertes des mindestens einen Reifens geführt hätte, berücksichtigt.

Somit wird ein verbessertes Verfahren zur Bestimmung eines Abriebwertes eines Reifens eines Fahrzeugs bereitgestellt, wobei der Abriebwert genauer und präziser mit einem tatsächlichen Abriebwert des mindestens einen Reifens übereinstimmt. Insgesamt wird folglich ein verbessertes Verfahren zur Bestimmung eines Abriebwertes mindestens eines Reifens eines Fahrzeugs bereitgestellt.

Bei der Bestimmung des neuen Abriebwertes wird der zunächst in Abhängigkeit der physikalischen Messgröße ermittelte Abriebwert in Abhängigkeit des weiteren Abriebwertes verändert. Beispielsweise kann der zunächst bestimmte Abriebwert um insbesondere 0 % bis 100 % oder um mehr als 100% verändert und also korrigiert werden. Die Veränderung des Abriebwertes kann über eine Addition oder Subtraktion eines Abriebwertes oder um eine Multiplikation oder Division mit einem Faktor geschehen.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung wird ein Lenkwinkel einer Lenkvorrichtung des Fahrzeugs bestimmt und die Fahrt des Fahrzeugs aus dem Startnichtbewegungszustand heraus wird anhand des Lenkwinkels bestimmt, dabei wird der abgeschlossene Fahrtvorgang des Fahrzeugs in Abhängigkeit der Fahrt des Fahrzeugs aus dem Startnichtbewegungszustand heraus bestimmt.

Gemäß einer vorzugsweisen Ausgestaltungsform der vorliegenden Erfindung wird eine Lenkwinkelabfolge einer Lenkvorrichtung des Fahrzeugs bestimmt und die Fahrt des Fahrzeugs aus dem Startnichtbewegungszustand heraus wird anhand der Lenkwinkelabfolge bestimmt, dabei wird der abgeschlossene Fahrtvorgang des Fahrzeugs in Abhängigkeit der Fahrt des Fahrzeugs aus dem Startnichtbewegungszustand heraus bestimmt.

Hintergrund sind ein charakteristischer Lenkwinkel oder eine charakteristische Lenkwinkelabfolge, die bei einem Ausfahren oder Losfahren, beispielsweise aus einer Parklücke oder einem Parkplatz heraus, erfolgen können.

Bei der Lenkvorrichtung handelt sich beispielsweise um eine Lenkstange oder um ein Lenkrad des Fahrzeugs.

Gemäß einer nächsten vorzugsweisen Ausgestaltungsform der vorliegenden Erfindung wird ein Lenkwinkel einer Lenkvorrichtung des Fahrzeugs bestimmt und die Fahrt des Fahrzeugs in den Endnichtbewegungszustand hinein wird anhand des Lenkwinkels bestimmt, wobei der abgeschlossene Fahrtvorgang des Fahrzeugs in Abhängigkeit der Fahrt des Fahrzeugs in den Endnichtbewegungszustand hinein bestimmt wird.

Gemäß einer nächsten vorzugsweisen Ausgestaltungsform der vorliegenden Erfindung wird eine Lenkwinkelabfolge einer Lenkvorrichtung des Fahrzeugs bestimmt und die Fahrt des Fahrzeugs in den Endnichtbewegungszustand hinein wird anhand der Lenkwinkelabfolge bestimmt, wobei der abgeschlossene Fahrtvorgang des Fahrzeugs in Abhängigkeit der Fahrt des Fahrzeugs in den Endnichtbewegungszustand hinein bestimmt wird.

Hintergrund sind wiederum der charakteristische Lenkwinkel oder die charakteristische Lenkwinkelabfolge, die bei einem Einparken in eine Parklücke oder in einen Parkplatz erfolgen können.

Gemäß einer nächsten vorzugsweisen Ausgestaltungsform der vorliegenden Erfindung handelt es sich bei dem Startnichtbewegungszustand und/oder bei dem Endnichtbewegungszustand um einen solchen Zustand des Fahrzeugs, in dem sich das Fahrzeug mindestens drei Minuten lang nicht relativ zu dem Untergrund, auf dem das Fahrzeug steht, bewegt hat. Bei dem Untergrund, auf dem das Fahrzeug steht, handelt es sich beispielsweise um eine Fahrbahn oder um einen Parkplatz.

Durch den erfindungsgemäßen Umstand, wonach es sich bei dem Startnichtbewegungszustand und/oder bei dem Endnichtbewegungszustand um einen solchen Zustand des Fahrzeugs handelt, in dem sich das Fahrzeug mindestens drei Minuten lang nicht relativ zum Untergrund, auf dem das Fahrzeug steht, bewegt hat, kann sichergestellt oder ermöglicht werden, dass bestimmte verkehrsbedingte Unterbrechungen der Fahrt des Fahrzeugs bei einer Bestimmung des weiteren Abriebwertes oder des neuen Abriebwertes unberücksichtigt bleiben können. Solche bestimmte verkehrsbedingte Unterbrechungen können beispielsweise durch Blinklichtanlangen oder Lichtzeichenanlagen verursacht werden.

Gemäß einer nächsten vorzugsweisen Ausgestaltungsform der vorliegenden Erfindung handelt es sich bei dem Startnichtbewegungszustand und/oder bei dem Endnichtbewegungszustand um eine solchen Zustand des Fahrzeugs, in dem ein Antriebsmotor des Fahrzeugs mindestens drei Minuten lang nicht betrieben worden ist.

Gemäß einer nächsten vorzugsweisen Ausgestaltungsform der vorliegenden Erfindung weist das Verfahren die folgenden weiteren Schritte auf:
- Bestimmen eines Lenkwinkels einer Lenkvorrichtung des Fahrzeugs und Bestimmen einer Fahrgeschwindigkeit des Fahrzeugs;
- Vergleichen der Fahrgeschwindigkeit mit einer Schwellengeschwindigkeit;
- Vergleichen des Lenkwinkels mit einem Schwellenlenkwinkel, wobei für den Fall, wonach die Fahrgeschwindigkeit die Schwellengeschwindigkeit erreicht oder unterschreitet, und zugleich der Lenkwinkel den Schwellenlenkwinkel erreicht oder überschreitet, dem Lenkwinkel ein spezifischer weiterer Abriebfaktor geordnet wird und der neue Abriebwert und/oder der weitere Abriebwert in Abhängigkeit des spezifischen weiteren Abriebfaktors mittels der Auswertevorrichtung verändert werden.

Für den Fall, dass der weitere Abriebwert in Abhängigkeit des spezifischen weiteren Abriebfaktors verändert wird, wird der zunächst und in Abhängigkeit einer physikalischen Messgröße bestimmte Abriebwert des mindestens eines Reifens verändert.

Durch den erfindungsgemäßen Umstand, wonach das Verfahren die zuvor genannten weiteren Schritte aufweist, kann ein weiterer Umstand bei der Bedienung des Fahrzeugs, wobei der Umstand einen Einfluss auf den Abrieb des mindestens einen Reifens haben könnte, berücksichtigt werden. Somit wird der Abriebwert noch präziser bestimmt und er stimmt in einem noch höheren Maß mit dem tatsächlichen Abriebwert des mindestens einen Reifens überein.

Das Vergleichen der Fahrgeschwindigkeit mit einer Schwellengeschwindigkeit erfolgt insbesondere mittels der Auswertevorrichtung.

Das Vergleichen des Lenkwinkels mit einem Schwellenlenkwinkel erfolgt insbesondere mittels der Auswertevorrichtung.

Das Zuordnen eines spezifischen weiteren Abriebfaktors zu dem Lenkwinkel erfolgt ebenfalls insbesondere mittels der Auswertevorrichtung.

Gemäß einer nächsten vorzugsweisen Ausgestaltungsform der vorliegenden Erfindung werden räumliche Positionsdaten des Fahrzeugs bereitgestellt, wobei anhand der räumlichen Positionsdaten des Fahrzeugs ein räumlicher Bereich, in dem sich das Fahrzeug befindet, bestimmt werden kann, wobei dem räumlichen Bereich ein topografischer Abriebfaktor zugeordnet wird, wobei mittels der Auswertevorrichtung der neue Abriebwert oder weitere Abriebwert in Abhängigkeit des topografischen Abriebfaktors verändert werden. Bei den räumlichen Positionsdaten des Fahrzeugs handelt es sich insbesondere um GPS-Daten des Fahrzeugs. Die räumlichen Positionsdaten werden insbesondere an die Auswertevorrichtung übertragen und/oder von dieser empfangen. Für den Fall, dass der weitere Abriebwert in Abhängigkeit des topografischen Abriebfaktors verändert wird, wird der zunächst und in Abhängigkeit einer physikalischen Messgröße bestimmte Abriebwert des mindestens eines Reifens verändert.

Durch den erfindungsgemäßen Umstand, wonach räumliche Positionsdaten des Fahrzeugs bereitgestellt werden, wobei anhand der räumlichen Positionsdaten des Fahrzeugs ein räumlicher Bereich, in dem sich das Fahrzeug befindet, bestimmt werden kann, wobei dem räumlichen Bereich ein topografischer Abriebfaktor zugeordnet wird, wobei mittels der Auswertevorrichtung der neue Abriebwert oder weitere Abriebwert in Abhängigkeit des topografischen Abriebfaktors verändert werden, kann beispielsweise eine Gewichtung eines mittleren Korrekturfaktors des Abriebwertes des mindestens einen Reifens mit Geodaten oder topografischen Daten über die Topografie des Gebietes, in dem sich das Fahrzeug bewegt, erfolgen. Beispielsweise könnte in einem städtischen Umfeld ein stärkerer Abrieb erfolgen, als in einer ländlichen Region. Somit kann ein Abriebwert bereitgestellt werden, der noch mehr mit einem tatsächlichen Abriebwert des mindestens einen Reifens übereinstimmt.

Weitere Vorteile, Merkmale und Einzelheiten, auf die die Erfindung in ihrem Umfang aber nicht beschränkt ist, werden nun anhand der Zeichnung näher beschrieben.

Es zeigt:

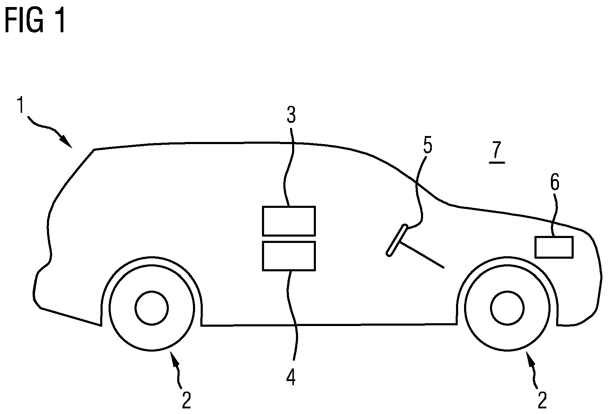

Fig. 1: Eine schematische Darstellung eines Fahrzeugs.

In der Figur 1 ist ein Fahrzeug 1 schematisch dargestellt. Das Fahrzeug 1 weist mindestens einen Reifen 2 auf. Ferner ist gemäß der in der Figur 1 dargestellten beispielhaften Ausführungsform eines Fahrzeugs eine Auswertevorrichtung 3 an oder in dem Fahrzeug angeordnet. Die Auswertevorrichtung 3 ist zur Bestimmung eines Abriebwertes des mindestens einen Reifens 2 in Abhängigkeit einer physikalischen Messgröße des Fahrzeugs 1 vorgesehen. Die physikalische Messgröße des Fahrzeugs 1 kann beispielsweise mittels einer Sensorvorrichtung 4 bestimmt werden. Bei der Auswertevorrichtung 3 handelt es sich beispielsweise um eine Computervorrichtung. Bei der Sensorvorrichtung 4 handelt es sich beispielsweise um eine Beschleunigungsmessvorrichtung.

Erfindungsgemäß wird ein abgeschlossener Fahrtvorgang oder Fahrzyklus des Fahrzeugs 1 bestimmt, wobei es sich bei einem abgeschlossenen Fahrtvorgang um eine Fahrt des Fahrzeugs 1 aus einem Startnichtbewegungszustand des Fahrzeugs 1 heraus bis zu einer Fahrt des Fahrzeugs 1 in einen Endnichtbewegungszustand des Fahrzeugs 1 hinein handelt. Dabei wird dem abgeschlossenen Fahrtvorgang ein weiterer Abriebwert des mindestens einen Reifens 2 zugeordnet.

Erfindungsgemäß wird anschließend ein neuer Abriebwert mittels der Auswertevorrichtung 3 in Abhängigkeit des Abriebwertes und des weiteren Abriebwertes bestimmt.

Vorzugsweise wird ein Lenkwinkel einer Lenkvorrichtung 5 bestimmt und die Fahrt des Fahrzeugs aus dem Startnichtbewegungszustand heraus oder die Fahrt des Fahrzeugs in den Endnichtbewegungszustand hinein anhand des Lenkwinkels der Lenkvorrichtung 5 bestimmt.

Insbesondere handelt es sich bei dem Startnichtbewegungszustand und/oder bei dem Endnichtbewegungszustand um einen solchen Zustand des Fahrzeugs 1, in dem ein Antriebsmotor 6 des Fahrzeugs 1 mindestens drei Minuten nicht betrieben worden ist.

Ferner werden beispielsweise räumliche Positionsdaten des Fahrzeugs 1 bereitgestellt, wobei anhand der räumlichen Positionsdaten des Fahrzeugs 1 ein räumlicher Bereich 7, innerhalb dem sich das Fahrzeug 1 befindet, bestimmt werden kann, wobei dem räumlichen Bereich 7 ein topografischer Abriebfaktor zugeordnet wird, wobei mittels der Auswertevorrichtung 3 der neue Abriebwert oder der weitere Abriebwert in Abhängigkeit des topografischen Abriebfaktors verändert werden.

### Bezugszeichenliste

- 1: Fahrzeug
- 2: Reifen
- 3: Auswertevorrichtung
- 4: Sensorvorrichtung
- 5: Lenkvorrichtung
- 6: Antriebsmotor
- 7: Räumlicher Bereich

## Patentansprüche

1. Verfahren zur Bestimmung eines Abriebwertes eines Reifens (2) eines Fahrzeugs (1), aufweisend die folgenden Schritte:
- Bereitstellen eines Fahrzeugs (1), wobei das Fahrzeug (1) mindestens einen Reifen (2) aufweist;
- Bereitstellen einer Auswertevorrichtung (3), wobei die Auswertevorrichtung (3) zur Bestimmung eines Abriebwertes des mindestens eines Reifens (2) in Abhängigkeit einer physikalischen Messgröße des Fahrzeugs (1) vorgesehen ist;
- Bestimmen der physikalischen Messgröße des Fahrzeugs (1);
- Bestimmen des Abriebwertes des mindestens eines Reifens (2) in Anhängigkeit der physikalischen Messgröße des Fahrzeugs (1) mittels der Auswertevorrichtung (3);
**gekennzeichnet durch** die weiteren Schritte:
- Bestimmen eines abgeschlossenen Fahrtvorgangs des Fahrzeugs (1), wobei es sich bei einem abgeschlossenen Fahrtvorgang um eine Fahrt des Fahrzeugs (1) aus einem Startnichtbewegungszustand des Fahrzeugs (1) heraus bis zu einer Fahrt des Fahrzeugs (1) in einen Endnichtbewegungszustand des Fahrzeugs (1) hinein handelt, wobei dem abgeschlossenen Fahrtvorgang ein weiterer Abriebwert des mindestens einen Reifens (2) zugeordnet wird;
- Bestimmen eines neuen Abriebwertes mittels der Auswertevorrichtung (3) in Abhängigkeit des Abriebwertes und des weiteren Abriebwertes, wobei ein Lenkwinkel einer Lenkvorrichtung (5) des Fahrzeugs (1) bestimmt wird und die Fahrt des Fahrzeugs (1) aus dem Startnichtbewegungszustand heraus anhand des Lenkwinkels bestimmt wird, wobei der abgeschlossene Fahrtvorgang des Fahrzeugs (1) in Abhängigkeit der Fahrt des Fahrzeugs (1) aus dem Startnichtbewegungszustand heraus bestimmt wird.

2. Verfahren nach Anspruch 1, **dadurch gekennzeichnet, dass** ein Lenkwinkel einer Lenkvorrichtung (5) des Fahrzeugs (1) bestimmt wird und die Fahrt des Fahrzeugs (1) in den Endnichtbewegungszustand hinein anhand des Lenkwinkels bestimmt wird, wobei der abgeschlossene Fahrtvorgang des Fahrzeugs (1) in Abhängigkeit der Fahrt des Fahrzeugs (1) in den Endnichtbewegungszustand hinein bestimmt wird.

3. Verfahren nach einem der vorhergehenden Ansprüche, **dadurch gekennzeichnet, dass** es sich bei dem Startnichtbewegungszustand und/oder bei dem Endnichtbewegungszustand um einen solchen Zustand des Fahrzeugs (1) handelt, in dem sich das Fahrzeug (1) mindestens drei Minuten lang nicht relativ zu dem Untergrund, auf dem das Fahrzeug (1) steht, bewegt hat.

4. Verfahren nach einem der vorhergehenden Ansprüche, **dadurch gekennzeichnet, dass** es sich bei dem Startnichtbewegungszustand und/oder bei dem Endnichtbewegungszustand um einen solchen Zustand des Fahrzeugs (1) handelt, in dem ein Antriebsmotor (6) des Fahrzeugs (1) mindestens drei Minuten lang nicht betrieben worden ist.

5. Verfahren nach einem der vorhergehenden Ansprüche, **gekennzeichnet durch** die weiteren Schritte:
- Bestimmen eines Lenkwinkels einer Lenkvorrichtung (5) des Fahrzeugs (1) und Bestimmen einer Fahrgeschwindigkeit des Fahrzeugs (1);
- Vergleichen der Fahrgeschwindigkeit mit einer Schwellengeschwindigkeit;
- Vergleichen des Lenkwinkels mit einem Schwellenlenkwinkel, wobei für den Fall, wonach die Fahrgeschwindigkeit die Schwellengeschwindigkeit erreicht oder unterschreitet und zugleich der Lenkwinkel den Schwellenlenkwinkel erreicht oder überschreitet, dem Lenkwinkel ein spezifischer weiterer Abriebfaktor geordnet wird und der neue Abriebwert und/oder der weitere Abriebwert in Abhängigkeit des spezifischen weiteren Abriebfaktors mittels der Auswertevorrichtung (3) verändert werden.

6. Verfahren nach einem der vorhergehenden Ansprüche, **dadurch gekennzeichnet, dass** räumliche Positionsdaten des Fahrzeugs (1) bereitgestellt werden, wobei anhand der räumlichen Positionsdaten des Fahrzeugs (1) ein räumlicher Bereich (7), innerhalb dem sich das Fahrzeug (1) befindet, bestimmt werden kann, wobei dem räumlichen Bereich (7) ein topografischer Abriebfaktor zugeordnet wird, wobei mittels der Auswertevorrichtung (3) der neue Abriebwert oder der weitere Abriebwert in Abhängigkeit des topografischen Abriebfaktors verändert werden.

## Claims

1. Method for determining an abrasion value of a tyre (2) of a vehicle (1) comprising the following steps:
- providing a vehicle (1), the vehicle (1) having at least one tyre (2);
- providing an evaluation device (3), the evaluation device (3) being intended for determining an abrasion value of the at least one tyre (2) in dependence on a physical measured variable of the vehicle (1);
- determining the physical measured variable of the vehicle (1);
- determining the abrasion value of the at least one tyre (2) in dependence on the physical measured variable of the vehicle (1) by means of the evaluation device (3);
**characterized by** the further steps of:
- determining a completed trip of the vehicle (1), a completed trip consisting of driving of the vehicle (1) from a starting non-moving state of the vehicle (1) to driving of the vehicle (1) into a final non-moving state of the vehicle (1), the completed trip being assigned a further abrasion value of the at least one tyre (2);
- determining a new abrasion value by means of the evaluation device (3) in dependence on the abrasion value and the further abrasion value, wherein a steering angle of a steering device (5) of the vehicle (1) is determined and the driving of the vehicle (1) from the starting non-moving state is determined on the basis of the steering angle, wherein the completed trip of the vehicle (1) is determined in dependence on the driving of the vehicle (1) from the starting non-moving state.

2. Method according to Claim 1, **characterized in that** a steering angle of a steering device (5) of the vehicle (1) is determined and the driving of the vehicle (1) into the final non-moving state is determined on the basis of the steering angle, wherein the completed trip of the vehicle (1) is determined in dependence on the driving of the vehicle (1) into the final non-moving state.

3. Method according to either of the preceding claims, **characterized in that** the starting non-moving state and/or the final non-moving state is such a state of the vehicle (1) in which the vehicle (1) has not moved in relation to the underlying surface on which the vehicle (1) is standing for at least three minutes.

4. Method according to one of the preceding claims, **characterized in that** the starting non-moving state and/or the final non-moving state is such a state of the vehicle (1) in which a drive motor (6) of the vehicle (1) has not been operated for at least three minutes.

5. Method according to one of the preceding claims, **characterized by** the further steps of:
- determining a steering angle of a steering device (5) of the vehicle (1) and determining a driving speed of the vehicle (1);
- comparing the driving speed with a threshold speed;
- comparing the steering angle with a threshold steering angle, wherein, if the driving speed reaches or falls below the threshold speed and at the same time the steering angle reaches or exceeds the threshold steering angle, the steering angle is assigned a specific further abrasion factor and the new abrasion value and/or the further abrasion value are changed in dependence on the specific further abrasion factor by means of the evaluation device (3).

6. Method according to one of the preceding claims, **characterized in that** spatial position data of the vehicle (1) are provided, wherein a spatial region (7) within which the vehicle (1) is located can be determined on the basis of the spatial position data of the vehicle (1), wherein the spatial region (7) is assigned a topographic abrasion factor, wherein the new abrasion value or the further abrasion value is changed in dependence on the topographic abrasion factor by means of the evaluation device (3).

## Revendications

1. Procédé pour déterminer l'abrasion d'un pneumatique (2) d'un véhicule (1), comprenant les étapes suivantes :
- se mettre à disposition un véhicule (1), le véhicule (1) comportant au moins un pneumatique (2) ;
- se mettre à disposition un dispositif d'évaluation (3), le dispositif d'évaluation (3) étant prévu pour déterminer une valeur d'abrasion dudit au moins un pneumatique (2) en fonction d'une grandeur physique mesurée du véhicule (1) ;
- déterminer la grandeur physique mesurée du véhicule (1) ;
- déterminer la valeur d'abrasion dudit au moins un pneumatique (2) en fonction de la grandeur physique du véhicule (1) mesurée au moyen du dispositif d'évaluation (3) ;
**caractérisé par** les étapes supplémentaires suivantes :
- déterminer un processus de déplacement terminé du véhicule (1), un processus de déplacement terminé étant un déplacement du véhicule (1) d'un état de repos de départ du véhicule (1) à un déplacement du véhicule (1) vers un état de repos final du véhicule (1), une autre valeur d'abrasion du pneumatique (2) étant attribuée au processus de déplacement terminé ;
- déterminer une nouvelle valeur d'abrasion au moyen du dispositif d'évaluation (3) en fonction de la valeur d'abrasion et de l'autre valeur d'abrasion, un angle de braquage d'un dispositif de direction (5) du véhicule (1) étant déterminé et le déplacement du véhicule (1) à partir de l'état de repos initial étant déterminé en fonction de l'angle de braquage, le processus de déplacement terminé du véhicule (1) étant déterminé sur la base du déplacement du véhicule (1) à partir de l'état de repos de départ.

2. Procédé selon la revendication 1, **caractérisé en ce qu'**un angle de braquage d'un dispositif de direction (5) du véhicule (1) est déterminé et **en ce que** le déplacement du véhicule (1) dans l'état de repos final est déterminé sur la base de l'angle de braquage, le processus de déplacement terminé du véhicule (1) étant déterminé en fonction du déplacement du véhicule (1) vers l'état de repos final.

3. Procédé selon l'une des revendications précédentes, **caractérisé en ce que** l'état de repos de départ et/ou l'état de repos final est un état du véhicule (1) dans lequel le véhicule (1) n'a pas bougé par rapport au sol sur lequel le véhicule (1) est stationné pendant au moins trois minutes.

4. Procédé selon l'une des revendications précédentes, **caractérisé en ce que** l'état de repos de départ et/ou l'état de repos final est un état du véhicule (1) dans lequel un moteur d'entraînement (6) du véhicule (1) n'a pas fonctionné pendant au moins trois minutes.

5. Procédé selon l'une des revendications précédentes, **caractérisé par** les étapes supplémentaires suivantes :
- déterminer l'angle de braquage d'un dispositif de direction (5) du véhicule (1) et déterminer la vitesse de déplacement du véhicule (1) ;
- comparer la vitesse de déplacement à une vitesse seuil ;
- comparer l'angle de braquage à un angle de braquage seuil, dans lequel, dans le cas où la vitesse de déplacement atteint ou s'abaisse en dessous de la vitesse seuil et où, en même temps, l'angle de braquage atteint ou dépasse l'angle de braquage seuil, un autre facteur d'abrasion spécifique est associé à l'angle de braquage et la nouvelle valeur d'abrasion et/ou l'autre valeur d'abrasion sont modifiées au moyen du dispositif d'évaluation (3) en fonction de l'autre facteur d'abrasion spécifique.

6. Procédé selon l'une des revendications précédentes, **caractérisé en ce que** des données de position spatiales du véhicule (1) sont fournies, une zone spatiale (7) dans laquelle se trouve le véhicule (1) pouvant être déterminée à l'aide des données de position spatiales du véhicule (1), un facteur d'abrasion topographique étant associé à ladite zone spatiale (7), la nouvelle valeur d'abrasion ou l'autre valeur d'abrasion étant modifiée au moyen du dispositif d'évaluation (3) en fonction du facteur d'abrasion topographique.
